# EUROPÄISCHE PATENTSCHRIFT

(11) **EP 1 826 102 B1**
(45) Veröffentlichungstag und Bekanntmachung des Hinweises auf die Patenterteilung: **10.10.2012**
(21) Anmeldenummer: 07002241.3
(22) Anmeldetag: 02.02.2007
(51) Int. Cl.: B62D 25/06, B62D 29/04, B60J 10/00

(54) **Dachrahmen für ein Fahrzeug**
Roof rail for a vehicle
Cadre de toit pour un véhicule

(30) Priorität: 24.02.2006 DE 102006008651
(43) Veröffentlichungstag der Anmeldung: 29.08.2007
(73) Patentinhaber: Wilhelm Karmann GmbH, 49084 Osnabrück (DE)
(72) Erfinder: Claußen, Gunnar, 49080 Osnabrück (DE); Baro, Dietmar, 49074 Osnabrück (DE); Budzinski, Thorsten, 49525 Lengerich (DE)
(74) Vertreter: Kronthaler, Schmidt & Coll.

(56) Entgegenhaltungen:
- WO-A-97/00180
- FR-A- 2 613 414
- US-A1- 2002 058 124
- US-A1- 2003 159 358

## Beschreibung

Die Erfindung betrifft einen Dachrahmen oder ein Dachrahmenteil für ein Fahrzeug, insbesondere ein Cabrioletfahrzeug.

Ein solcher Dachrahmen, insbesondere seitliche Dachrahmenteile, die von der A-Säule eines Fahrzeugs angrenzend an den Windschutzscheibenrahmen zu dessen Heckbereich oder C-Säule laufen, müssen zur Stabilität des Fahrzeugdachs und des Fahrzeugrahmens beitragen. Andererseits dienen sie als Halterung für Dichtlippen, beispielsweise um bei Cabrioletfahrzeugen zu Seitenfenstern hin oder bei Fahrzeugen mit stets geschlossenem Verdeck zu Türrahmenteilen hin zu dichten. Bei Cabrioletfahrzeugen nehmen die Dachrahmenteile zusätzlich Lagerungen für Lenker auf, mit denen das Fahrzeugdach geöffnet und geschlossen werden kann. Der Dachrahmen kann aus mehreren Dachrahmenteilen aufgebaut sein, insbesondere bei Cabrioletfahrzeugen, um das Dach zusammenfalten zu können. Daher beinhaltet der Begriff "Dachrahmen" im Sinne dieser Beschreibung und den Ansprüchen auch Dachrahmenteile, die einen solchen Dachrahmen bilden.

Die tragenden Profile des Dachrahmens sind in der Regel als Strangpressprofil ausgebildet, die vorzugsweise als Hohlprofile mit geschlossenem oder näherungsweise geschlossenem Querschnitt gestaltet sind, um die im Betrieb auftretenden Lasten aufnehmen zu können. Es ist auch möglich, die Dachrahmenteile abschnittsweise mit unterschiedlichen Profilen zu gestalten, wie es beispielsweise in der EP 0 806 313 B1 offenbart ist. Diese Strangpressprofile sehen Aufnahmen für Dichtungsprofile aus verhältnismäßig weichem gummiartigem Material vor. Beispielsweise wird in einen Hohlraum formschlüssig ein erster Teil eines Dichtungsprofils aufgenommen, während der Dichtteil des Dichtungsprofils aus dem Hohlraum heraus in Richtung der abzudichtenden Fläche vorsteht. Bei der in der EP 0 806 313 B1 beschriebenen Anordnung werden, wie im Stand der Technik üblich, die Dichtungen nach dem Fertigen des Strangpressprofils an diesem durch Formschluss und/oder ein Kraftschlussmittel angebracht.

Aus der DE 43 14 192 C2, der DE 295 09 880 U1, der DE 296 21 997 U1 und der DE 298 12 428 U1 sind jeweils Dichtungssysteme für den Dachrahmen bekannt, bei welchen ein solches verhältnismäßig weiches Dichtungsprofil, das beispielsweise zwei gegeneinander gerichtete Dichtlippen aufweist, am Dachrahmen befestigt wird. Dazu ist das Dichtprofil mit einem Befestigungsbereich versehen, der aus einem anderen Material als der Dichtbereich gebildet sein kann. Am Befestigungsbereich wird das Dichtprofil mit dem Dachrahmen verschraubt oder vernietet.

Entsprechende Anordnungen sind auch aus der US 2003/0159358 A1, der WO 97/00180 und der US 2002/0058 124 A1 bekannt.

Davon ausgehend ist es Aufgabe der Erfindung, einen Dachrahmen für ein Fahrzeug, insbesondere ein Cabrioletfahrzeug, vorzusehen, der die erforderlichen tragenden Eigenschaften aufweist und einfach herstellbar ist.

Diese Aufgabe wird mit einem Dachrahmen mit den Merkmalen des Anspruchs 1 gelöst. Bevorzugte Ausführungsformen sind in den abhängigen Ansprüchen angegeben.

Der Erfindung liegt der Gedanke zugrunde, auch die tragende Struktur des Dachrahmens, d.h. den Profilbereich, der beispielsweise als Hohlprofil oder als Profil mit einer einem Hohlprofil angenäherten Gestalt gebildet ist, aus Kunststoff zu formen und somit den Dichtungsbereich zusammen mit dem Profilbereich als integrales Spritzgussteil aus Kunststoff auszubilden. Dadurch entfallen Montageschritte, wie das Anbringen der Dichtungsprofile am Dachrahmen. Außerdem kann der Dachrahmen an sich den Belastungen formangepasst gestaltet werden, indem beispielsweise kontinuierlich entlang des Dachrahmens die jeweiligen Querschnitte des Dachrahmens den zu erwartenden Belastungen angepasst sind und sich in Längsrichtung des Dachrahmens verändern.

Besonders bevorzugt wird es, wenn der Dachrahmen eine Form aufweist, dass eine Entformungsrichtung eines oder mehrerer Kerne im Wesentlichen in Längsrichtung entlang des Dachrahmens bzw. des Dachrahmenteils erfolgt. In diesem Fall sind keine komplizierten, vielteiligen Gussformen erforderlich. Vielmehr genügt eine zweiteilige Form mit zusätzlichem Kern.

Nach einer bevorzugten Ausführungsform sind der Profilbereich und der Dichtungsbereich aus unterschiedlichen Materialien spritzgegossen. Beispielsweise kann der Profilbereich als tragende Struktur aus einem Hartkomponentenkunststoff, beispielsweise PBT GF30, geformt werden, während Dichtlippen des Dichtungsbereichs aus EPDM, d.h. einem verhältnismäßig weichen, schaumartigen und elastischen Material, geformt sind. Die Hartkomponente kann vorzugsweise glasfaserverstärkt oder anderweitig verstärkt sein, damit sie ähnliche Festigkeits- und Wärmeeigenschaften wie Aluminium aufweist. Die Elastizität des Materials des Dichtungsbereichs kann zum Entformen, insbesondere zur Entnahme des Kerns, ausgenutzt werden.

Grundsätzlich sind alle Kunststoffmaterialkombinationen für den Profilbereich und den Dichtungsbereich möglich, solange sie sich zur integralen Herstellung eignen und keine gesonderten Befestigungsschritte, beispielsweise durch Formschluss oder Kraftschluss, erforderlich sind. Vorteilhaft an der einteiligen Formung des Dachrahmens ist weiterhin, dass alle Bauteile aus Kunststoff in einem einheitlichen Verfahrensvorgang ausgebildet werden, so dass sie beispielsweise einheitlich färbbar sind und keiner Nachbearbeitung bedürfen. Außerdem entfällt Korrosionsanfälligkeit des Strangpressprofilteils.

Vorzugsweise ist der Werkstoff des Dichtungsbereichs ein weicherer Kunststoff als derjenige des Profilbereichs. Dadurch kann den Dichtlippen die erforderliche Elastizität verliehen werden. Die Werkstoffkombination ist solange tolerierbar, solange an der Übergangsstelle zwischen den beiden Materialien eine Verschmelzung insoweit stattfindet, dass die Dichtbereiche und die Profilbereiche eine weitgehend unlösbare Verbindung eingehen.

Vorzugsweise sind die Dichtungsbereiche als zwei an unterschiedlichen Stellen des Profilbereichs angeschlossene Dichtlippen gestaltet, nämlich z.B. eine innere und eine äußere Dichtlippe in Einbaulage im Fahrzeug.

Nach einer bevorzugten Ausführungsform sind am Profilbereich Verstärkungen, beispielsweise Verstärkungsrippen, vorgesehen. Die Verstärkungsrippen können beispielsweise bei einem U-förmigen Profil im Inneren des U's quer zur Profillängsrichtung angeordnet werden.

Integral mit dem Profilbereich können Befestigungseinrichtungen für Dachgestängeteile ausgebildet werden. Solche Befestigungseinrichtungen sind vorzugsweise Schraubdome, in die insbesondere ein metallischer Gewindeeinsatz zum Erhöhen der Dauerhaftigkeit aufgrund der zu erwartenden wiederholten Belastungen einsetzbar ist. Nach einer weiter bevorzugten Ausführungsform wird der Gewindeeinsatz integral mit dem Dachrahmen einsatzgegossen, so dass keine weiteren Nachbearbeitungsschritte zum Anbringen der Schraubdome erforderlich sind. Vorzugsweise weisen die Schraubdome im Übergangsbereich zum Profilbereich eine ellipsoide Grundfläche auf, so dass die Krafteinleitung in den Profilbereich des Dachrahmens vom Dachgestänge her gut verteilt ist.

Nach einer bevorzugten Ausführungsform ist der Anschlussbereich zwischen Profilbereich und Dichtungsbereich als geformte Schnittstelle gebildet, d.h. mit einer Formgebung, welche eine gute Haftung des Dichtungsbereichs am Profilbereich unterstützt. Beispielsweise kann diese Schnittstelle in Form von verhältnismäßig breiten, gestuften Bereichen am Profilbereich und am Dichtungsbereich gebildet sein, die zueinander komplementär sind. Alternativ oder zusätzlich ist es möglich, eine Nut-Feder-Profilierung vorzusehen, indem beispielsweise der Dichtungsbereich in eine Nut am Profilbereich mit einem vorspringenden Bereich eingreift. Die Schnittstelle ist vorzugsweise mit identischer oder sich verändernder Gestalt über die gesamte Länge des Dachrahmenteils ausgebildet. Für verschiedene Bereich entlang des Dachrahmens sowie für verschiedene Bereiche des Dichtungsbereichs können gleiche oder unterschiedliche Schnittstellen vorgesehen sein.

Nachfolgend wird die Erfindung beispielhaft anhand der beigefügten Figuren beschrieben. Es zeigen:
- Fig. 1: eine perspektivische Ansicht von schräg unten eines erfindungsgemäßen Dachrahmens;
- Fig. 2: eine Ansicht von einem Innenbereich des Fahrzeugs ausgehend auf den Dachrahmen; und
- Fig. 3: eine weitere perspektivische Ansicht des Dachrahmens gemäß Fig. 1 und 2.

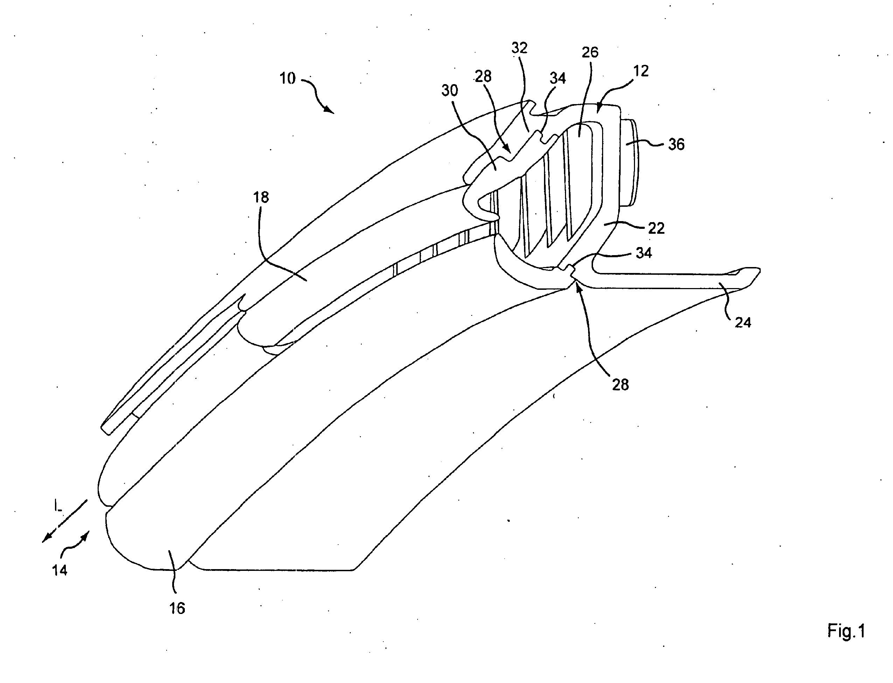

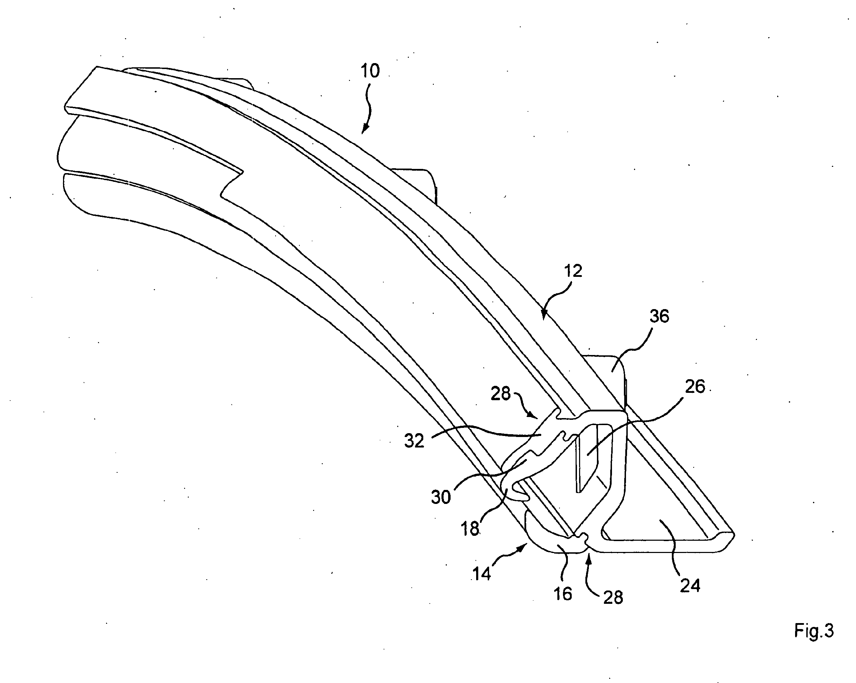

Erfindungsgemäß sind bei der in Fig. 1 bis 3 gezeigten Ausführungsform eines Dachrahmens 10 sowohl ein Profilbereich 12 als auch Dichtungsbereiche 14, die als Dichtlippen 16, 18 gestaltet sind, aus Kunststoff integral geformt.

Der Profilbereich 12 weist eine Querschnittsgestalt auf, die im Wesentlichen der Form einer zwei entspricht, so dass ein im Wesentlichen U-förmiger tragender Bereich 22 und ein Deckenbereich 24 geformt sind. Im Inneren des U-förmigen Bereichs sind Verstärkungsrippen 26 ausgebildet, die im Wesentlichen senkrecht zur Längsrichtung des Dachrahmens, die mit L bezeichnet ist, verlaufen und den Profilbereich versteifen. Durch diese Gestaltung ist es ferner möglich, einen zum Gießen erforderlichen Kern in Richtung L aus dem Dachrahmenteil 10 zu entnehmen, wobei er zunächst unter Ausnutzung der Elastizität der Dichtlippen 16, 18 aus dem mit Verstärkungsrippen 26 gebildeten Bereich gezogen und anschließend senkrecht dazu in Richtung L entnommen wird.

Die Dichtlippen 16, 18 sind derart gestaltet, dass sie in ihrem sich annähernden Bereich im Wesentlichen einen Winkel einschließen, der etwa dem Einlaufwinkel einer Seitenscheibe eines Fahrzeugfensters entspricht.

Wie in Fig. 1 erkennbar ist, ist bei dieser Ausführungsform die äußere Dichtlippe 18 entlang der Längsrichtung L des Dachrahmens mehrteilig gestaltet, so dass sie ihre Querschnittsform entlang des Dachrahmens verändert. Vorzugsweise werden zwischen den einzelnen Teilen sich kontinuierlich anschließende Übergänge vorgesehen. Statt die Dichtlippe 18 mehrteilig zu gestalten, sollte sie vorzugsweise einteilig, gegebenenfalls ebenfalls mit sich in Längsrichtung L des Dachrahmens 10 verändernder Form, gebildet werden. Dies ergibt bessere optische Eigenschaften und Dichteigenschaften. Die innere Dichtlippe 16 ist bei der in den Figuren gezeigten Ausführungsform mit sich entlang des Dachrahmenteils 10 nicht verändernder Querschnittsgestalt geformt.

Zum Anschluss der äußeren Dichtlippe 18 am Profilbereich 12 ist eine geformte Schnittstelle 28 vorgesehen, die in der Gestalt eines gestuften Anschlussbereichs 30 an der Dichtlippe 18 und eines komplementär dazu gestuften Anschlussbereichs 32 am Profilbereich 12 geformt ist. Zusätzlich weist die Schnittstelle der äußeren Dichtlippe 18 zum Profilbereich 12 eine Nut-Feder-Profilierung 34 auf, bei der ein Vorsprung der Dichtlippe 18 in einer im Profilbereich 12 verlaufenden Nut liegt. Durch die breite Abstützung sowie verhältnismäßig gro-ße Flächenpaarungen zwischen Dichtungsbereich 14 und Profilbereich 12 ist es möglich, eine sichere und dauerhaft zuverlässige Verbindung zwischen den unterschiedlichen Werkstoffen des Dichtungsbereichs 14 und des Profilbereichs 12 auszubilden, welche auch wiederholten Bewegungen der Dichtlippe 18, wie sie beispielsweise beim Öffnen und Schließen eines Seitenfensters auftreten, standhält.

Eine Alternative für die Schnittstelle 28 ist zwischen der inneren Dichtlippe 16 und dem Profilbereich 12 gezeigt. Dieser Anschluss ist weitgehend ausschließlich als Nut-Feder-Profilierung 34 gebildet, welche jedoch in Verbindung mit geeigneter Materialwahl für den Dichtungsbereich 14 und den Profilbereich 12 ebenfalls eine zuverlässige Verbindung herstellt. Insbesondere ist es möglich, durch ein geeignetes Zweikomponentenspritzgussverfahren den Übergang derart auszubilden, dass bereits beim Spritzgießen sich die Materialien im Übergangsbereich vermischen und somit der Anschlussbereich zuverlässig stabil bleibt.

Statt der Verstärkungsrippen 26 können andere Maßnahmen zur Versteifung des Profilbereichs 12 vorgesehen werden. Derartige versteifungsmaßnahmen können lokal an besonders beanspruchten Stellen in Profillängsrichtung L des Dachrahmens 10 oder an gezielt ausgewählten Stellen oder entlang der gesamten Länge des Profils vorgesehen sein.

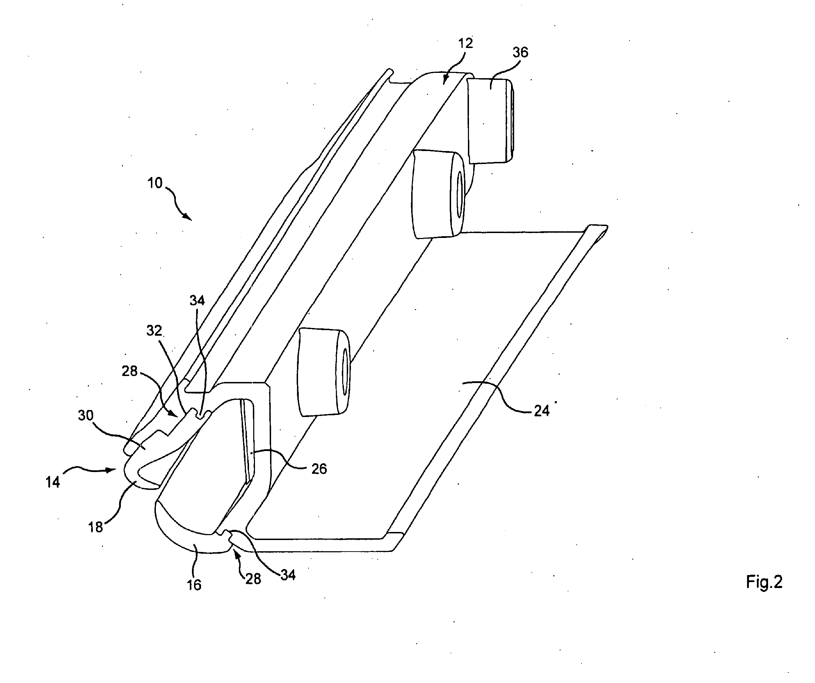

Wie am besten aus Fig. 2 erkennbar ist, ist es ferner möglich, an den Dachrahmen 10 integral, d.h. ohne nachträgliche Montage, Befestigungseinrichtungen 36 für Dachgestänge eines Cabrioletfahrzeugs anzubringen. Bei der in den Figuren gezeigten Ausführungsform sind diese Befestigungseinrichtungen als Schraubdome gestaltet. Die Schraubdome können nach Bedarf mit einem Gewindeeinsatz versehen sein, der nachträglich montiert, z.B. eingeschraubt, wird oder vorzugsweise beim Spritzgießen einsatzgegossen wird. Dieser Gewindeeinsatz ist beispielsweise ein metallischer Gewindeeinsatz, um Abnutzungen des Gewindes durch die Bewegung des Dachgestänges und die damit auf die Lagerstellen aufgebrachten Lasten zu vermeiden.

Der wesentliche Aspekt der Erfindung liegt darin, sowohl die tragende Struktur des Dachrahmens als auch die am Dachrahmen zu befestigenden Dichtungsbereiche integral zu formen, d.h. aus Kunststoff in einem einheitlichen Spitzgussverfahren, ohne dass zum Anbringen der Dichtungsbereiche eine besondere Montage der Dichtungsbereiche am Dachrahmen erforderlich ist. Außerdem ist es aufgrund des direkten Anschlusses an den Dachrahmen nicht erforderlich, die Dichtungsbereiche mit eigenen Dichtungsbereichsverstärkungen zu versehen.

### BEZUGSZEICHENLISTE

- 10: Dachrahmen
- 12: Profilbereich
- 14: Dichtungsbereich
- 16: Dichtlippe
- 18: Dichtlippe
- 22: U-förmiger tragender Bereich
- 24: Deckenbereich
- 26: Verstärkungsrippen
- 28: Schnittstelle
- 30: gestufter Anschlussbereich
- 32: gestufter Anschlussbereich
- 34: Nut-Feder-Profilierung
- 36: Befestigungseinrichtung

## Patentansprüche

1. Dachrahmen (10) für ein Fahrzeug, enthaltend einen tragenden Profilbereich (12) und einen damit verbundenen Dichtungsbereich (14), wobei der Profilbereich (12) und der damit verbundene Dichtungsbereich (14) durch Spritzguss aus Kunststoff integral geformt sind.

2. Dachrahmen (10) nach Anspruch 1,
**dadurch gekennzeichnet,**
**dass** der Profilbereich (12) und der Dichtungsbereich (14) aus verschiedenen Materialien integral spritzgegossen sind, insbesondere als Zweikomponentenspritzgussteil.

3. Dachrahmen (10) nach einem der vorhergehenden Ansprüche, **dadurch gekennzeichnet,**
**dass** der Profilbereich (12) aus einem glasfaserverstärkten Kunststoff gebildet ist.

4. Dachrahmen (10) nach einem der vorhergehenden Ansprüche, **dadurch gekennzeichnet,**
**dass** der Dichtungsbereich (14) aus einem relativ zum -Profilbereich weicheren Kunststoff gebildet ist.

5. Dachrahmen (10) nach einem der vorhergehenden Ansprüche, **dadurch gekennzeichnet,**
**dass** am Profilbereich (12) zwei Dichtungsbereiche (14) in Form einer inneren Dichtlippe (16) und einer äußeren Dichtlippe (18) angeschlossen sind.

6. Dachrahmen (10) nach einem der vorhergehenden Ansprüche, **dadurch gekennzeichnet,**
**dass** der Profilbereich (12) mit Verstärkungen (26), insbesondere Verstärkungsrippen, versehen ist.

7. Dachrahmen (10) nach einem der vorhergehenden Ansprüche,
**dadurch gekennzeichnet,**
**dass** am Profilbereich Befestigungseinrichtungen (36) für Dachgestänge angebracht sind.

8. Dachrahmen (10) nach einem Anspruch 7,
**dadurch gekennzeichnet,**
**dass** die Befestigungseinrichtungen (36) Schraubdome, insbesondere mit einem metallischen Gewindeeinsatz, enthalten.

9. Dachrahmen (10) nach Anspruch 8,
**dadurch gekennzeichnet,**
**dass** Gewindeeinsätze integral mit dem Dachrahmen (10) einsatzgegossen sind oder nachträglich eingeschraubt sind.

10. Dachrahmen (10) nach einem der Ansprüche 8 oder 9,
**dadurch gekennzeichnet,**
**dass** die Schraubdome eine im Wesentlichen ellipsenförmige Grundfläche aufweisen.

11. Dachrahmen (10) nach einem der vorhergehenden Ansprüche,
**dadurch gekennzeichnet,**
**dass** zwischen Profilbereich (12) und Dichtungsbereich (14) eine geformte Schnittstelle (28) vorgesehen ist.

12. Dachrahmen (10) nach Anspruch 11,
**dadurch gekennzeichnet,**
**dass** die geformte Schnittstelle (28) komplementär gestufte Flächen (30, 32) am Profilbereich (12) und am Dichtungsbereich (14) aufweist.

13. Dachrahmen (10) nach Anspruch 11 oder 12,
**dadurch gekennzeichnet,**
**dass** die geformte Schnittstelle (28) eine Nut-Feder-Profilierung (34) aufweist.

## Claims

1. A roof frame (10) for a vehicle, including a supporting profiled portion (12) and a sealing portion (14) connected with it, wherein said profiled portion (12) and said sealing portion (14) connected with it are integrally formed from a plastic material by injection moulding.

2. The roof frame (10) according to claim 1, **characterised in that** the profiled portion (12) and the sealing portion (14) are integrally injection-moulded from different materials, in particular as a two-component injection-moulded part.

3. The roof frame (10) according to any one of the preceding claims, **characterised in that** the profiled portion (12) is made from a glass fibre-reinforced plastic material.

4. The roof frame (10) according to any one of the preceding claims, **characterised in that** the sealing portion (14) is formed from a plastic material which is softer than that of the profiled portion.

5. The roof frame (10) according to any one of the preceding claims, **characterised in that** two sealing portions (14) in the form of an inner sealing lip (16) and an outer sealing lip (18) adjoin the profiled portion (12).

6. The roof frame (10) according to any one of the preceding claims, **characterised in that** the profiled portion (12) is provided with reinforcements (26), in particular reinforcing ribs.

7. The roof frame (10) according to any one of the preceding claims, **characterised in that** fastening means (36) for roof linkages are attached to the profiled portion.

8. The roof frame (10) according to claim 7, **characterised in that** the fastening means (36) include screw domes, in particular with a metallic thread insert.

9. The roof frame (10) according to claim 8, **characterised in that** the thread inserts are insert-cast integrally with the roof frame (10) or screwed in subsequently.

10. The roof frame (10) according to any one of claims 8 or 9, **characterised in that** the screw domes have a substantially elliptical base.

11. The roof frame (10) according to any one of the preceding claims, **characterised in that** a moulded interface (28) is provided between the profiled portion (12) and the sealing portion (14).

12. The roof frame (10) according to claim 11, **characterised in that** the moulded interface (28) comprises complementary stepped surfaces (30, 32) at the profiled portion (12) and at the sealing portion (14).

13. The roof frame (10) according to claim 11 or 12, **characterised in that** the moulded interface (28) comprises a tongue-and-groove profile (34).

## Revendications

1. Cadre de toit (10) de véhicule, qui présente une région de support profilée (12) et une région d'étanchéité (14) reliée avec cette première, ladite région profilée (12) et ladite région d'étanchéité (14) reliée avec cette première étant réalisées d'un seul tenant en matière plastique au moyen de moulage par injection.

2. Cadre de toit (10) selon la revendication 1, **caractérisé en ce que** la région profilée (12) et la région d'étanchéité (14) sont intégralement moulées par injection à partir de matériaux différents, notamment sous forme d'une pièce moulée par injection à deux composants.

3. Cadre de toit (10) selon l'une quelconque des revendications précédentes, **caractérisé en ce que** la région profilée (12) est réalisée en matière plastique renforcée par des fibres de verre.

4. Cadre de toit (10) selon l'une quelconque des revendications précédentes, **caractérisé en ce que** la région d'étanchéité (14) est réalisée en une matière plastique plus souple que celle de la région profilée.

5. Cadre de toit (10) selon l'une quelconque des revendications précédentes, **caractérisé en ce que** deux régions d'étanchéité (14) sous forme d'une lèvre d'étanchéité interne (16) et une lèvre d'étanchéité externe (18) joignent la région profilée (12).

6. Cadre de toit (10) selon l'une quelconque des revendications précédentes, **caractérisé en ce que** la région profilée (12) présente des renforcements (26), notamment des nervures de renforcement.

7. Cadre de toit (10) selon l'une quelconque des revendications précédentes, **caractérisé en ce que** des moyens de fixation (36) de tringles de toit sont reliés avec la région profilée.

8. Cadre de toit (10) selon la revendication 7, **caractérisé en ce que** les moyens de fixation (36) comprennent des blocs de fixation filetés, notamment avec un insert fileté métallique.

9. Cadre de toit (10) selon la revendication 8, **caractérisé en ce que** les inserts filetés sont coulés par insertion d'un seul tenant avec le cadre de toit (10) ou vissés ultérieurement.

10. Cadre de toit (10) selon l'une quelconque des revendications 8 ou 9, **caractérisé en ce que** les blocs de fixation filetés présentent une base sensiblement elliptique.

11. Cadre de toit (10) selon l'une quelconque des revendications précédentes, **caractérisé en ce que** l'on prévoit une jonction moulée (28) entre la région profilée (12) et la région d'étanchéité (14).

12. Cadre de toit (10) selon la revendication 11, **caractérisé en ce que** la jonction moulée (28) comprend des faces (30, 32) échelonnées de manière complémentaire dans la région profilée (12) et dans la région d'étanchéité (14).

13. Cadre de toit (10) selon la revendication 11 ou 12, **caractérisé en ce que** la jonction moulée (28) comprend un profil à rainure et languette (34).
